# EUROPEAN PATENT APPLICATION

(11) **EP 4 748 972 A1**
(43) Date of publication of application: **27.05.2026**
(21) Application number: 24214184.4
(22) Date of filing: 20.11.2024
(51) Int. Cl.: C23F 11/02, F01D 25/00, B65B 55/19, B65D 81/26, C23F 11/00

(54) **ANTI-CORROSION PROTECTOR FOR USE IN PREVENTING CORROSION ON THE SURFACE OF A HOLE FORMED IN A MACHINE PART**

(71) Applicant: Siemens Gamesa Renewable Energy A/S, 7330 Brande (DK)
(72) Inventor: NIELSEN, Thomas Bekkelund, 8700 Horsens (DK); CHRISTENSEN, Martin Andreas, 6000 Kolding (DK); AGERFELDT, Kim, 6600 Vejen (DK)
(74) Representative: SGRE-Association

(57) **Abstract**

The invention describes a protector (1) for use in preventing corrosion on the surfaces of a hole (2H) formed in a component (2), comprising a carrier (10) bearing a supply of a volatile corrosion inhibitor, which carrier (10) is shaped to fit inside the hole (2H); a magnetic cover (11) dimensioned to extend beyond the circumference of the hole (2H); and a means of attaching the carrier (10) to the magnetic cover (11). The invention further describes a method of handling a component (2) comprising an arrangement of holes (2H) using a set of such protectors (1) to prevent corrosion in the holes (2H) during storage and/or transport of the component (2).

## Description

### Background

A large machine such as a wind turbine generator can comprise several large steel components, for example a bedframe, a drivetrain shaft, a hub, a rotor housing, a bearing, a flange, etc. Any of those components can be manufactured at one location and then transported to another location. Many months can elapse before the components are assembled. During that time, it is important to protect critical parts from corrosion. In particular, tapped holes must be kept free from corrosion, since a fastener may not be threaded into a tapped hole with corrosion (rust) on its inner thread. Fulfilling this requirement is associated with considerable effort and expense.

In one approach, holes in such a large wind turbine component are protected from corrosion by applying an anti-seize product - usually a type of lubricant or grease - onto the interior surfaces. Workers must be protected from exposure to harmful chemicals during application of the anti-seize product, adding significantly to the manufacturing costs. At some later stage, the component is prepared for a subsequent assembly stage by thoroughly removing the anti-seize product from all of the holes. The anti-seize product must be removed from critical surfaces such as friction flanges or any surface that has been treated by a process such as thermal spray metallizing (TSM). However, it can be impossible to completely remove such an anti-seize product on account of the surface micro-geometry resulting from the treatment process. The surface micro-geometry generally comprises countless microscopic ridges and cavities, and the anti-seize product enters these cavities and cannot be removed using conventional cleaning methods. It can be necessary to re-machine the surface and to re-apply the TSM treatment, incurring unfavourably high costs.

Because the components can be very large (components of a wind turbine generator may have dimensions in the order of 5 - 12 m; other machine parts may have larger dimensions), the lengthy cleaning procedure requires costly floor-space and one or more cranes for lifting and moving the components. Scaffolding and platforms may be required to give workers safe access to the regions being cleaned of the grease. These cleaning tasks, which are performed manually, are arduous and time-consuming, and must be performed under compliance with various health and safety regulations to protect the health of the workers and to avoid strain. The cleaning stage may therefore also require costly ventilation equipment. In addition, the cleaning process needs many types of consumables, for example cloths, steel brushes, toxic cleaning agents, vacuum cleaning devices etc., and results in large quantities of chemical waste products which are costly to dispose of. If threads have become damaged, costs arise from the need to re-cut the threads. Furthermore, using a tap to re-cut a thread can compromise the geometry of the thread of a critical connection. When such a fault is detected, the component is scrapped. In a worst-case situation, a poorly re-cut thread is undetected and results in catastrophic failure of the threaded connection.

In an alternative approach, the inside surfaces of the holes can be protected from corrosion using a volatile corrosion inhibitor (VCI). The VCI can applied at the manufacturing site. The holes are then sealed using plugs, and the component can then be transported to its next destination. However, the effectiveness of the VCI at protecting the surfaces of a hole from corrosion is dependent on a tight-fitting plug, but the tightly-fitting mating surfaces of hole and plug can make it very difficult to remove the plug, particularly if the time elapsed between manufacture and cleaning is very long (several months or more), and the mating surfaces have seized. To remove a "stuck" plug, it may be necessary to use a levering tool such as a screwdriver. The need to use such tools can lead to thread damage and the additional expense of having to re-cut threads. Here also, additional costs arise from the need to provide platforms, lifts etc., in order to facilitate access to the plugs inserted into holes of a large component. Another problem with this approach is that the component manufacturer must ensure a sufficient supply of plugs. This also leads to additional expense when the components feature various different hole diameters. For these reasons, removal of the plugs is also a time-consuming and costly procedure.

Furthermore, plugs may only be available with certain diameters, and holes with other diameters must be protected from corrosion using an anti-seize grease. For these reasons, the known approaches to corrosion protection of wind turbine components are costly.

It is therefore an object of the invention to overcome the problems described above.

This object is achieved by the claimed protector; by the claimed protector arrangement; and by the claimed method of handling a component.

### Description

The inventive protector is used to protect against corrosion that might otherwise occur in holes of a metal component during storage and transport stages, i.e. before threaded fasteners or similar can be inserted into the holes in a subsequent assembly stage. It may be assumed that the component of made of a magnetically attractive metal such as steel. A component can be a drivetrain components of a large wind turbine.

According to the invention, the protector comprises a carrier bearing a supply of a volatile corrosion inhibitor (VCI), which carrier is shaped to fit inside the hole; a magnetic cover dimensioned to extend beyond the circumference of the hole; and a means of attaching the carrier to the magnetic cover. As used in the context of the carrier, the expression "shaped to fit inside the hole" simply means that the carrier is narrow enough and short enough to fit inside the hole; the carrier is preferably positioned centrally within the hole. It shall be understood that the magnetic cover extends some way beyond the circumference of the hole, i.e. the surface area of the magnetic cover is significantly greater than the area of the circular opening. In this way, the magnetic cover surrounds the hole, preferably by a generous margin, and effectively "adheres" to the component owing to the magnetic attraction between them.

According to the invention, the protector arrangement comprises a set of such protectors, wherein the number of protectors corresponds to the number of holes in the component.

According to the invention, the method of handling the type of component described above comprises providing an instance of the inventive protector arrangement. The carrier of each protector is inserted into a hole, and the magnetic cover of that protector is brought into contact with the outer surface of the component. Magnetic attraction then holds the protector in place against the component. The magnetic cover thus acts as a seal between the interior of the hole and the external environment, so that the supply of VCI can effectively prevent corrosion of any surface in the holes during storage and/or transport of the component.

A major advantage of the inventive protector is that it does away with the need to apply and remove anti-seize grease, thereby saving many tens of man-hours and also essentially eliminating consumables and chemical waste. For example, for a present-day large wind turbine, in excess of 120 man hours can be needed to clean the components, and a 1200 m² footprint is required below a crane (at a cost of 7.50 €/m²) for lifting the heavy components during the cleaning procedure. The invention also has the attendant advantages of avoiding grease-related damage to critical surfaces such as friction flanges.

Another advantage of the invention is that it also provides an economical way of deploying a VCI (in lieu of an anti-seize product) while doing away with the need to provide tight-fitting plugs. Because the inventive protector does not require a friction fit to stay in place, it can be removed easily and without the need for any tools. Each protector can simply be pulled off the component with ease. After removing the inventive corrosion protectors, the components do not need any further cleaning effort.

Since it is straightforward to apply and remove the inventive protector, health and safety regulations can be met without requiring the costly measures associated with the prior art approaches.

Another advantage of the invention is that it allows a "one size fits all" design, i.e. a magnetic cover with a sufficiently large width can fit over holes of different diameters, so that significant cost savings are made in this regard also.

Particularly advantageous embodiments and features of the invention are given by the dependent claims, as revealed in the following description. Features of different claim categories may be combined as appropriate to give further embodiments not described herein.

A VCI may also be referred to as a vapour-phase inhibitor, a vapour-phase corrosion inhibitor, a vapour-transported corrosion inhibitor, etc. Such corrosion inhibitors can comprise organic and/or inorganic inhibitors, preferably comprising only substances that do not pose any significant health risks. Corrosion protection is ensured by various mechanisms such as physisorption, chemisorption, barrier protection, thin-film formation and electrochemical processes.

Since the carrier is placed in the interior of the hole and remains there as long as the protector is in place, releasing its supply of VCI to the enclosed volume of air inside the hole, the carrier may be referred to in the following as a "VCI depot". The carrier can be coated and/or infused with a suitable VCI.

In a particularly preferred embodiment of the invention, the VCI is a controlled-release VCI, for example a VCI that is released in proportion to the moisture content of the surrounding air, in this case the air inside the sealed hole. An example of such a product is Excor^{®} ICB or "Intelligent Corrosion Blocker", a VCI that is released only in conditions of high relative humidity, i.e. only when the relative humidity in the surrounding air exceeds 50%. At lower moisture levels, the VCI is not released. An advantage of using a VCI such as Excor^{®} ICB is that the protection lifetime of the VCI depot comprises a few years at least, so that the VCI depot can be used multiple times before its supply of VCI is exhausted.

The magnetic cover can be realised in any suitable way. In a particularly preferred embodiment of the invention, the magnetic cover is made by cutting a sheet magnet to the desired shape (e.g. a disc or annulus), and embedding the magnet in a polymer body. For example, the magnet can be glued into a polyethylene cap.

The VCI depot can be realised in one piece with the magnetic cover, for example the carrier can be made of the same material in which the magnet is embedded. However, once the supply of VCI has evaporated, the depleted protector would be disposed of. In a preferred embodiment of the invention, therefore, the carrier and magnetic cover are separate parts that can be connected, i.e. the carrier is detachable from the re-usable magnetic cover.

The VCI depot can have any suitable shape, for example a rectangle whose width is slightly less than the hole diameter, and whose length is slightly less than the hole depth. In a preferred embodiment of the invention, the carrier is a narrow-diameter rod or tube of polymer, previously infused with and/or coated with a suitable VCI. The carrier can be formed as a "string" of solid polymer, for example with a diameter in the order of 3 mm and supplied on a roll or spool. The rod can be pushed into a corresponding mating interface on the inner surface of the magnetic cover. A depleted carrier can simply be pulled off the magnetic cover and replaced by a fresh carrier. The connection between carrier and cover is preferably robust, so that the carrier remains attached to the cover when the cover is pulled off the component.

In a particularly preferred embodiment of the invention, VCI-infused polymer can be supplied in the form of flexible piping, for example wound on a drum, and a carrier can be simply cut, as required, to the desired length. The VCI-infused polymer can be elastic, allowing it to be pulled into the desired shape and to increase its surface area.

After sealing a VCI depot into each hole of a component using the inventive protector arrangement, an unspecified length of time can elapse during which the component is stored/transported prior to a subsequent assembly stage. At some point, the protectors must be removed. To this end, a worker can simply prise the magnetic cover from the outer surface of the component. However, in a preferred embodiment of the invention, the magnetic cover of a protector is formed to comprise a pull-tab or similar means with which a worker can easily grip the protector to pull the magnetic cover off the component.

In a further preferred embodiment of the invention, the step of removal is made more efficient by linking multiple protectors so that these can simultaneously be pulled off the component. To this end, a nylon cord or thin cable can be threaded through the pull-tabs of a set of protectors. A worker need only pull on the loose ends of the cord/wire to detach the entire set of protectors.

A component may be formed to have an annular arrangement of though-holes, i.e. holes that extend all the way through the thickness of the component. In this case, two protectors can be deployed for each through-hole, inserted from opposite sides of the component. Alternatively, the carriers of a set of protectors can be inserted from one side of the component, and the holes can be closed off at the other side by using the magnetic covers alone (without carriers attached). The inside of the plain magnetic cover can be given a spray-coating of VCI.

During storage and transport, such large components may be arranged in stacks. This is facilitated by the invention, since the magnetic covers of the inventive protectors can be favourably thin. For example, a magnetic cover comprising the magnetic sheet embedded in polymer and formed to include one or more pull-tabs can have a thickness in the order of only a few mm. The favourably low height of the magnetic cover allows further packaging material to lie closely about the component. An advantage of relatively flat magnetic covers is to avoid stretching of foil or other thin material used to form a protective wrapping about the component.

With its innovative combination of a magnetically adhering cover and a VCI depot, the inventive protector overcomes multiple problems associated with the prior art. The magnetic cap attaches robustly to the outer surface of the component, forming an effective seal that creates a closed environment in the hole: the VCI cannot escape the hole, and air from outside cannot enter the hole. Since the diameter of the cap can be quite wide, a single type of protector can fit over holes with different diameters. When made of a suitably soft material such as polyethylene, the VCI depot can easily be cut to the desired length using a cutting tool such as a side cutter, shears, etc. Of course, the supplier can deliver VCI depots already cut to the desired length.

The inventive protectors can be removed very quickly. For example, several hundreds of protectors can be pulled off collectively as described above in a procedure that takes only a few minutes, comparing very favourably to the hours required to remove conventional form-fit plugs, and even more favourably to the hundreds of man-hours required to clean anti-seize grease from the holes.

The inventive protector also contributes to a marked decrease in waste, since the protectors can be reused. A controlled-release VCI depot can be reused several times within its useful lifespan (up to ten years), and a depleted carrier can simply be replaced by a length of fresh carrier. The magnetic cover can be reused an essentially unlimited number of times.

Sometimes the holes of a component are difficult to access, for example the holes are high up on a vertical component face. In a prior art approach, it would be necessary to provide a platform for a worker to access such holes to clean the anti-seize grease or to extract a form-fit plug. Using the inventive approach, it is possible to remove the protectors easily, even from holes that are out of reach. To this end, in a particularly preferred embodiment of the invention, groups of protectors (or even all the protectors) are linked by a cord or wire. A worker need only pull on the cord of a protector that is within reach, and all connected protectors can be pulled out in a single manoeuvre. Equally, a set of connected or linked protectors can be pulled out by attaching the linking cord or wire to a crane hook, and operating the crane to pull the protectors out of the holes.

The inventive protector can be used to prevent corrosion in holes of a component, and the entire component can be wrapped in a VCI-coated foil or paper to provide corrosion protection for the remaining surfaces.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an exemplary embodiment of the inventive protector;
Figure 2 illustrates assembly of the protector of Figure 1;
Figures 3 and 4 illustrate how the inventive protector may be deployed;
Figure 5 shows an exemplary embodiment of the inventive protector arrangement after assembly;
Figure 6 illustrates removal of the inventive protector arrangement;
Figure 7 shows a cross-section through an exemplary embodiment of the inventive protector;
Figures 8 - 10 illustrate problems associated with the prior art.

In the diagrams, like numbers refer to like objects throughout. Objects in the diagrams are not necessarily drawn to scale.

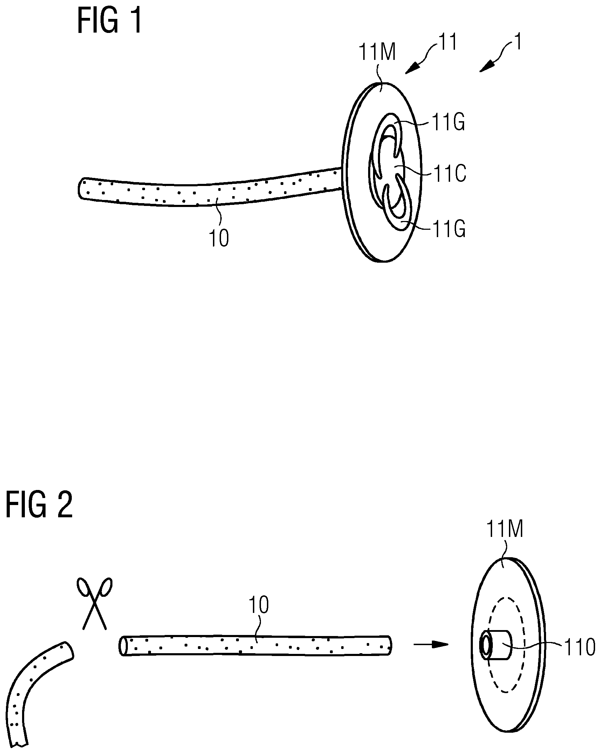

Figure 1 shows an exemplary embodiment of the inventive protector 1, showing a VCI depot 10 in the form of a rod or tube, attached to a magnetic cover 11. The magnetic cover 11 comprises a magnetic disc 11M as well as a means of gripping the protector 1. Here, the magnetic cover 11 comprises a pair of semi-circular loops 11G which can initially lie flat.

The inventive protector 1 can be assembled as shown in Figure 2. The diagram illustrates a step of cutting the VCI depot 10 to the desired length, for example as long as, or slightly shorter than, the depth of the hole which the protector 1 is to protect. The VCI depot 10 can be cut from a roll or coil of extruded polymer piping, or a polymer "string", which has been infused with a suitable VCI, preferably a controlled-release VCI such as Excor^{®} ICB.

The rod-shaped depot 10 is then pushed into a corresponding interface 110 on the inner side of the magnetic cover 11. In this exemplary embodiment, the magnetic cover 11 comprises a magnetic annulus 11M and a polymer cap 11C. The interface 110 to the rod-shaped depot 10 is formed on the cap 11C and extends through a corresponding opening in the magnetic annulus 11M.

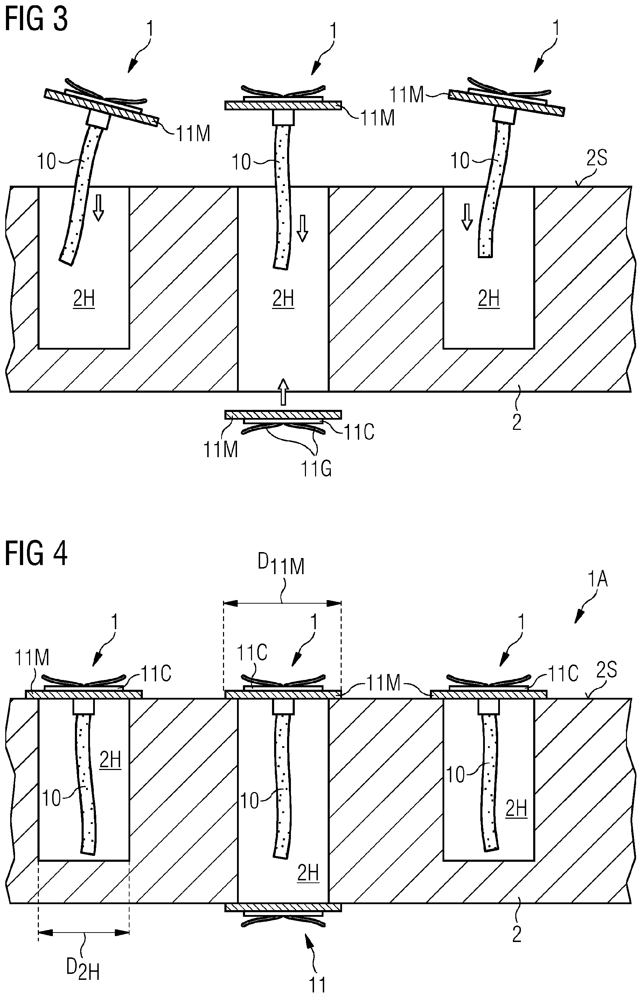

Figures 3 and 4 illustrate how the inventive protector 1 may be deployed to provide corrosion protection for holes 2H of a component such as a wind turbine bearing. Each hole can have a diameter in the order of 42 mm and a depth in the order of 550 mm.

The diagram shows two basic types of hole 2H: a blind hole is shown on the left-hand side and on the right-hand side; a through-hole 2H is shown in the centre (this is for convenience only; the holes 2H formed in an annular wind turbine component are generally all of the same type). Although shown here as simple straight-sided bores 2H, it shall be understood that a hole 2H can have an inner thread over some or all of its depth; equally, a hole 2H can comprise a tapped insert, a threaded bushing, etc. After assembling the protectors 1 as explained in Figure 2, a protector 1 is dropped into each hole 2H as shown in Figure 3 so that the VCI depot is suspended in the hole 2H, and the magnetic cover 11 closes the hole 2H from the exterior environment, since the magnetic attraction between it and the steel component 2 makes it adhere to the surface of the component 2. The diameter D11M of the magnetic cover 11 exceeds the diameter D2H of the hole 2H. To also close off the other opening of a through-hole 2H, another protector can be inserted. Alternatively, as shown here, it can be enough to place a magnetic cap 11 over the other opening of the hole 2H.

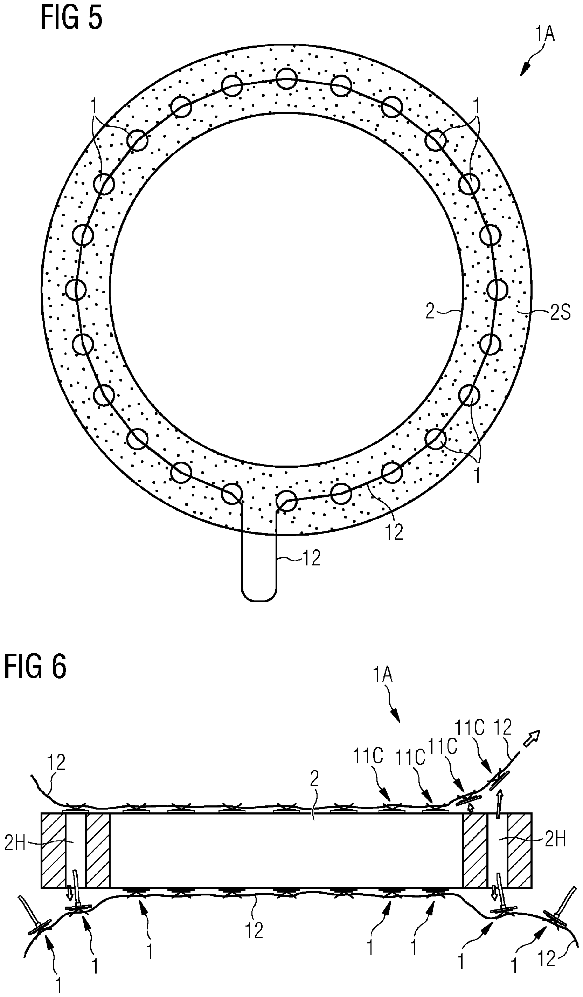

Figure 5 shows a component 2 after all holes 2H have been sealed using an annular arrangement 1A of protectors 1. Here, the protectors 1 are all linked by a cord 12 or wire, for example by threading the cord 12 through the loops 11G on the cap 11 prior to dropping the protectors 1 into place. Later, as shown in the lower part of Figure 6, the entire set of protectors 1 shown in Figure 6 can be removed from the component 2 by pulling on the cord 12. In Figure 6, all holes 2H are through-holes and have been covered by a linked set of caps 11, which are also removed simply by pulling on the linking cord 12.

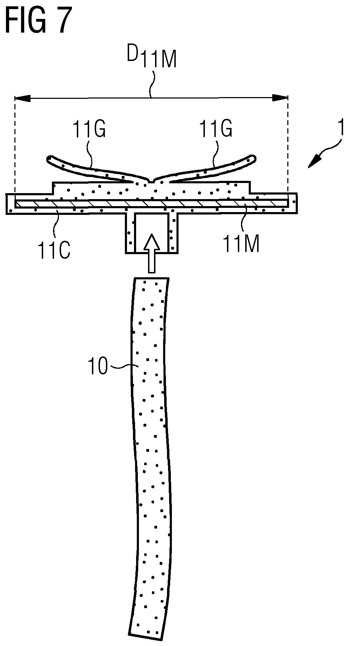

Figure 7 shows a cross-section through an exemplary embodiment of the inventive protector 1. The diagram shows a cover 11 in which a magnetic disc 11M is embedded in a polymer. The cover can be formed by injection-moulding, for example. Here, the cover 11 has been shaped to include two pull-tabs 11G, which lie flat unless lifted. The thickness of the cover 11 can be favourably low, e.g. less than 8 mm. The diameter of the magnetic sheet 11M can be large enough to fit over a range of holes, with a generous margin about the circumference of the largest hole. The diagram also shows a VCI depot 10 in the form of a rod, string or tube, which can be inserted into a mating feature on the inner face of the cover 11.

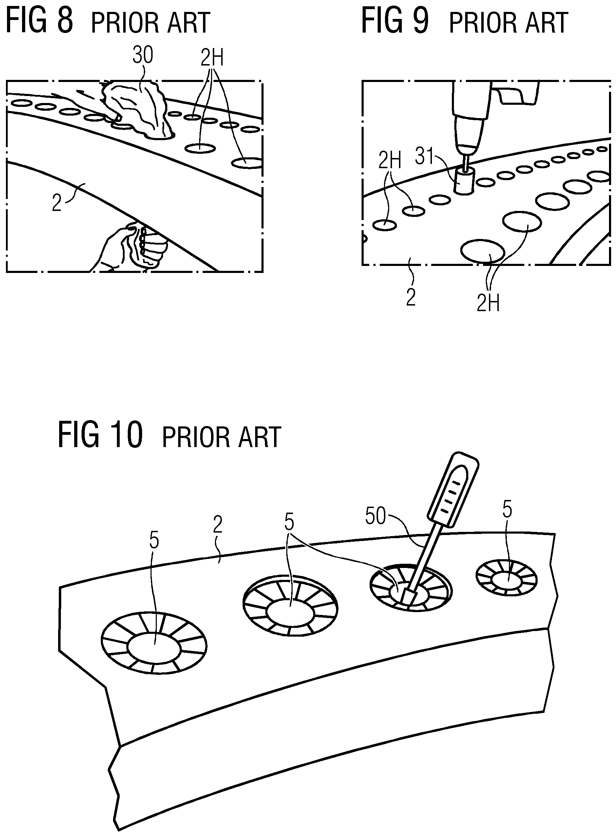

Figures 8 and 9 illustrate problems associated with the prior art approach of using anti-seize grease for corrosion protection. To prepare for a next stage of assembly, the anti-seize grease must first be thoroughly removed from the holes 2H of a component 2. In Figure 8, a worker is using a cloth 30 to remove the grease from a hole 2H. In Figure 9, a drill is being deployed to rotate a cylindrical cleaning pad 31 inside a hole 2H. Great care must be taken not to spread the anti-seize grease onto the surface 2S of the component 2. These time-consuming procedures must be carried out for each single hole 2H. In one scenario, a wind turbine rotor housing can have in the order of over 1,000 threaded holes which must be coated with anti-seize grease for protection during transport and storage, and the total cleaning effort to remove the grease from all holes can easily exceed 100 hours. In addition to the manpower cost, the cleaning agents and consumables 30, 31 are also costly and the used consumables must be disposed of in compliance with environmental regulations.

Figure 10 illustrates a problem associated with the prior art approach of using conventional plugs 5 for corrosion protection (the interior surface of each hole can be coated in lubricant or sprayed with a VCI). To prepare for a next stage of assembly, the plugs 5 must first be removed from the holes of the component 2. The plugs 5 are tightly-fitting, for example by a friction-fit or form-fit. However, this makes the plugs 5 difficult to remove. Here, one of the plugs 5 has become wedged deeper in a hole and cannot be removed in the intended manner. Instead, a worker must use a tool such as a screwdriver 50 to lever the plug 5 out of the hole. This can result in damage to the interior, for example damage to an inner thread which must then be re-cut. Here also, the procedure of removing conventional VCI plugs 5 is time-consuming and therefore expensive. A further problem with this approach is that inserting the tight-fitting plug can strip corrosion protection from the outer edges of the thread, while allowing water vapour to creep into the space between the plug and the hole. Corrosion will occur on the unprotected thread when the relative humidity reaches 50% or more.

Although the present invention has been disclosed in the form of preferred embodiments and variations thereon, it will be understood that numerous additional modifications and variations could be made there to without departing from the scope of the invention. For example, while the invention has been explained using an exemplary wind turbine component, it shall be understood that the inventive corrosion protection can be deployed on any type of machine part. Since the VCI is released only in the presence of a high moisture content in the surrounding air, the lifetime of the VCI depot can be favourably long, for example up to 10 years. To identify whether a VCI depot an be reused, the supplier may stamp the production date onto the VCI depot. Equally, the supplier may colour-code the VCI depots according to manufacturing date.

For the sake of clarity, it is to be understood that the use of "a" or "an" throughout this application does not exclude a plurality, and "comprising" does not exclude other steps or elements. Any pronoun denoting a specific gender shall be understood to apply equally to any gender identity.

## Claims

1. A protector (1) for use in preventing corrosion on the surfaces of a hole (2H) formed in a component (2), comprising
- a carrier (10) bearing a supply of a volatile corrosion inhibitor, which carrier (10) is shaped to fit inside the hole (2H);
- a magnetic cover (11) dimensioned to extend beyond the circumference of the hole (2H); and
- a means of attaching the carrier (10) to the magnetic cover (11).

2. A protector according to the preceding claim, wherein the magnetic cover (11) is shaped to contact only an outer surface (2S) of the component (2).

3. A protector according to any of the preceding claims, wherein the magnetic cover (11) comprises a sheet magnet (11M) at least partially enclosed in a polymer body.

4. A protector according to any of the preceding claims, wherein the carrier (10) is detachable from the magnetic cover (11).

5. A protector according to any of the preceding claims, wherein the carrier (10) is an elongate part.

6. A protector according to any of the preceding claims, wherein the carrier (10) is cut to the desired length from a roll of polymer piping.

7. A protector according to any of the preceding claims, wherein the carrier (10) is coated with the volatile corrosion inhibitor and/or the carrier (10) is infused with the volatile corrosion inhibitor.

8. A protector according to any of the preceding claims, wherein the volatile corrosion inhibitor is a controlled-release volatile corrosion inhibitor.

9. A protector according to the preceding claim, wherein the corrosion inhibitor is released only at a relative humidity in excess of 50%.

10. A protector according to any of the preceding claims, wherein the magnetic cover (11) comprises a pull-tab (11G) to facilitate removal of the protector (1).

11. A protector arrangement (1A) comprising a set of protectors (1) according to any of claims 1 to 10, and wherein the number of protectors (1) corresponds to the number of holes (2H) in a component (2).

12. A protector arrangement according to the preceding claim, comprising a cord (12) arranged to link a plurality of the magnetic covers (11) of the protector arrangement (1A).

13. A protector arrangement according to claim 11 or claim 12, adapted to prevent corrosion in through-holes (2H), comprising a set of magnetic covers (11) for covering the other ends of the through-holes (2H).

14. A method of handling a component (2) comprising an arrangement of holes (2H), which method comprises
- providing a protector arrangement (1A) according to any of claims 11 to 13; and
- inserting the carrier (10) of a protector (1) into each hole (2H) and positioning the magnetic cover (11) of that protector (1) against the outer surface (2S) of the component (2) to prevent corrosion in the holes (2H) during storage and/or transport of the component (2).

15. A method according to the preceding claim, wherein a plurality of the protectors (1) are linked by a cord (12), and wherein the method comprises a step of pulling on the linking cord (12) to collectively detach those protectors (1) from the component (2).
